# EUROPEAN PATENT APPLICATION

(11) **EP 3 306 170 A1**
(43) Date of publication of application: **11.04.2018**
(21) Application number: 16806934.2
(22) Date of filing: 08.06.2016
(51) Int. Cl.: F16L 55/165

(54) **CALIBRATING DEVICE**

(30) Priority: 08.06.2015 ES 201530800
(71) Applicant: Tecnologías Y Sistemas Para Rehabilitación, S.L., 28020 Madrid (ES)
(72) Inventor: FERNÁNDEZ VALDÉS, Mario, 28020 Madrid (ES)
(74) Representative: Elzaburu S.L.P.
(86) International application number: PCT/ES2016/070432
(87) International publication number: WO 2016/198714

(57) **Abstract**

A calibration device for a liner hose impregnated with wet-out fluid to line an existing pipe for conveying fluids, wherein a frame has a cross-section shaped like an inverted "T" comprising a horizontal section (12) driven by roller means (14) and a motorised entrance conveyor shelf (15) and a vertical section (13) that includes an exit conveyor shelf (21), the two conveyor shelves (15, 21) being separated by a lower calibration roller (22) parallel to an upper calibration roller (16), lower calibration roller (22) and upper calibration roller (16) being positioned vertically with respect to the other calibration roller.

## Description

### Object

This invention relates to a calibration device for distributing the wet-out fluid used to impregnate the interior of a hose used to line the inside of an existing host pipe for conveying fluids.

### Background of the invention

Damage to underground pipes in industrial and municipal settings is a continuously growing infrastructure problem attributable to a wide range of detrimental influences. For example, chemical waste, root intrusion, abrasive substances, earthquakes, and flooding all have corrosive effects on underground pipe systems that can lead to leaks and infiltration, putting the surrounding soil at risk.

Rehabilitating damaged pipes *in-situ* by inserting a flexible liner tube or hose inside, without leaving any annular space between the two is the method of choice for solving the problems just described above. However, known methods of lining pipes do not work with all the different types of non-standardised pipe materials and diameters in use at the present time.

The pipe lining method includes the steps of filling a liner hose with and distributing resin inside the liner hose, inserting the impregnated hose into the existing pipe, filling the impregnated hose with hot compressed air to push it against the host pipe being repaired; that is, creating a controlled pressurised environment to force the hose back into its original cylindrical shape so as to tightly line the inner diameter of the host pipe and then curing the impregnating resin in that position.

In other words, when lining tubular pipes with a hose by impregnating the liner hose, the hose is impregnated with resin and inserted into the tubular pipe, and the impregnated liner is pressed against the inner wall of the pipe to be lined at a pressure of 0.5 to 2 bars and cured by heating to temperatures above 50ºC; that is, the liner hose is expanded under pressure and heat.

In this stage pressurised steam is used to raise the temperature of the liner hose to above the lowest temperature in the range of deflection temperatures and to increase internal pressure in the hose.

The hose used to line the inside of the host pipe is filled with resin, and the resin is spread over the inside of the hose by a resin dispensing device.

Filling and spreading resin inside the liner hose is a slow, tedious, task and depends on the length and diameter of the pipe to be repaired. Furthermore, in order to be spread and cured, the resin needs to be worked within a working temperature range and not take longer than a working time period, both these parameters being attributes of the resin used to wet out the liner hose.

As a result, liner hose length is limited by the working parameters of the impregnating resin. In other words, to line the inside of an existing pipe requires making various excavations to join together sections of the liner hose. This increases the cost of lining an existing pipe.

### Summary

This invention seeks to solve one or more of the disadvantages referred to above by means of a calibration device for distributing the wet-out fluid used to impregnate a liner hose inserted into an existing host pipe to repair and make it suitable for fluids to flow through again, as defined in the claims.

Accordingly, the invention relates to a calibration device for distributing the wet-out fluid to impregnate a flexible liner hose used to rehabilitate a damaged or deteriorated pipe for conveying fluids.

The calibration device is suitable for use with flexible hoses wetted out with fluid having a broad range of hose diameters and lengths and impregnation thicknesses, guaranteeing perfect saturation of the hose, making it possible to reduce the number of insertion pits that have to be located at regular intervals along the existing structurally deficient host pipe run.

The calibration device comprises a frame driven by roller means that move it along the surface on which the hose filled with wet-out fluid has been deployed; the cross-section of the frame is shaped like an inverted T, that is, the frame comprises a horizontal section and a vertical section.

The horizontal section of the frame includes motor-driven roller means located on the portion closest to the surface of the ground, such that the calibration device can move forward by controlled rotation of the roller means at a constant forward speed from the proximal end to the distal end of the hose filled with wet-out fluid.

The distal side of the horizontal section of the frame not facing the surface of the ground comprises a motor-driven entrance conveyor shelf for handling and forward motion of the calibration device from the proximal end to the distal end of the liner hose.

The calibration device comprises the motorised entrance conveyor shelf and an exit conveyor shelf, the two conveyor shelves being separated by a lower calibration roller parallel to an upper pressure calibration roller, the upper calibration roller being vertically positioned over the lower calibration roller.

The calibration roller assembly has traction motor-driven rollers rotatingly mounted so as to rotate in a horizontal direction to support and press on the hose whose inside has been filled with lining fluid, the rollers exerting pull on the outside of the filled hose and allowing the hose to pass through between the two rollers cooperating with the roller means to move the calibration device forward from the proximal end to the distal end of the liner hose, ensuring that the calibration device moves forward along a straight, horizontal path.

The lower calibration roller comprises a roller mount mechanically fastened to the horizontal section of the frame at a preselected position where the horizontal section of the frame is joined to the vertical section of the frame.

The upper pressure calibration roller also comprises a roller mount whose height along the vertical section of the frame can be adjusted or regulated to exert pressure on the hose to distribute the wet-out fluid evenly through the inside of the hose so that the thickness of the layer of wet-out fluid attains a target thickness along the inner surface of the liner hose.

The upper pressure calibration roller is connected to a pressure assembly to apply constant pressure to the hose as it passes through between the two calibration rollers so that the liner fluid attains a target thickness and is evenly distributed along the inside of the liner hose by holding constant a preselected space separating the two calibration rollers, the space between the rollers depending on the desired target thickness of the liner fluid, hence, calibration of the liner fluid thickness.

The air is first drawn out from inside the hose, which is then filled with wet-out fluid, and the hose is passed through the calibration roller assembly at a controlled speed and separation according to the impregnation thickness desired, to ensure suitable saturation.

Accordingly, the height of the upper pressure roller above the lower roller is adjustable so that the rollers can be separated by a space sufficient to squeeze the liner hose filled with wet-out fluid, distribute the wet-out fluid inside the hose, and calibrate any liner hose thickness between the two vertical rollers to provide even calibration of the wet-out fluid throughout the inside of the liner hose.

The calibration rollers and the entrance conveyor shelf are arranged so as to form an assembly for feeding liner hose into the calibration device, and the feeder assembly cooperates with the roller means to move the calibration device ahead in a linear direction from the proximal end of the flexible liner hose to the distal end of that hose.

The lower calibration roller includes a first gear that rotates the lower roller by means of a first belt. The motorised entrance conveyor shelf has a second gear that rotates a feed roller by means of a second transmission belt, such that the first gear mechanically cooperates with the second gear, the first transmission belt, and the second transmission belt to transmit the rotational motion of the lower calibration roller to the entrance shelf. That is, the rotational motion of the entrance conveyor shelf and the lower calibration roller are synchronised by means of the first and second belts.

The synchronised motion of the calibration roller assembly, entrance conveyor shelf, and roller means causes the calibration device to move forward horizontally, feeding the liner hose between the calibration rollers, with the exit conveyor shelf guiding the liner hose with the distributed, calibrated wet-out fluid onto the surface of the ground along which the calibration device is moving forward.

Both the surfaces of the conveyor shelves and the surfaces of the vertically positioned calibration rollers are configured to adequately grip the flexible liner hose passing through the calibration rollers so as to impel the calibration device ahead at constant forward speed and exert a pulling force on the outside of the liner hose.

Thus, the entrance conveyor shelf is configured to feed the vertically positioned calibration rollers, such that the entrance drive conveyor shelf forms an acute angle of less than 45º with the horizontal axis of the surface on which the calibration device is moving forward to help lift the hose up to the entrance conveyor shelf and guide the liner hose filled with wet-out fluid towards the vertically positioned calibration rollers.

The vertically positioned calibration rollers are configured to allow passage of any thickness of liner hose filled with wet-out fluid in between the rollers.

The exit conveyor shelf is configured to guide the liner hose whose inside is filled with evenly distributed wet-out fluid off the calibration device and to deposit the liner hose on the surface along which the calibration device is moving forward.

The motorised entrance conveyor shelf may be a belt-driven roller conveyor, a band-driven roller conveyor, a conveyor belt or band, or the like.

The exit conveyor shelf may be a gravity idler roller conveyor, that is, the conveyor shelf forms an acute angle of less than 45° with the horizontal axis of the surface on which the liner hose is laid, to draw, guide, and direct the liner hose off onto the surface along which the calibration device is moving forward.

The exit conveyor shelf may also be a motor-driven conveyor.

The vertical section of the frame comprises the adjustable calibration roller assembly mounted and contained within the vertical section of the frame; the lower calibration roller is fixed, while the upper calibration roller is capable of moving up or down along the vertical section of the frame, as preferred; that is, the height of the upper calibration roller can be regulated to adjust for a preselected calibrated thickness of the filled liner hose, allowing the calibrated hose to pass through between the two vertically positioned rollers.

The first and second gears can be mechanically connected to electrically, pneumatically, or hydraulically operated driving means, with the gear rotation determining the forward speed of the calibration device. Similarly, the upper pressure calibration roller and the pressure assembly may also be electrically, pneumatically, or hydraulically driven, with the calibration device having a tank for hydraulic fluid at the top of the vertical section of the frame to synchronously operate all of the calibration device's rotating drive members. The hydraulic pressure system is operated by an electric motor or an internal combustion engine.

Rotation of the upper pressure calibration roller is synchronously coupled to the rotation of the lower calibration roller so as to cooperate in the forward motion of the calibration device at constant speed.

### Brief description of the drawings

A more detailed explanation of the invention is given in the following description based on the attached Figures.
- Figure 1 shows an elevational view of a calibration device for distributing wet-out fluid previously poured into a flexible liner hose for lining the inside of an existing host pipe for conveying fluids spanning a broad range of materials and sizes;
- Figure 2 shows a side view of the calibration device;
- Figure 3 shows an elevational view of an alternative calibration device for distributing wet-out fluid; and
- Figure 4 shows a side view of the calibration device.

### Description

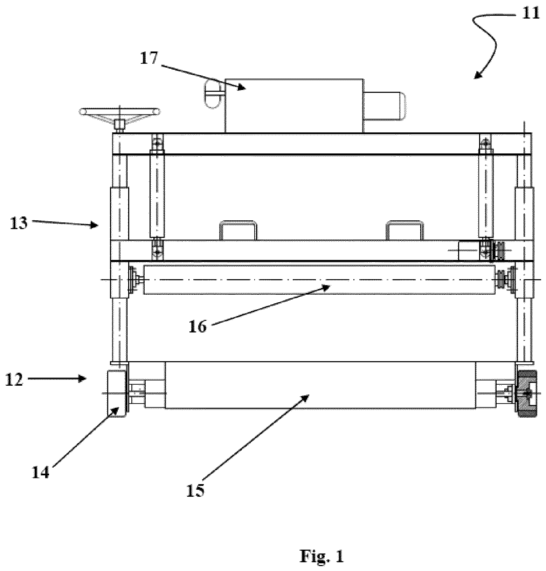

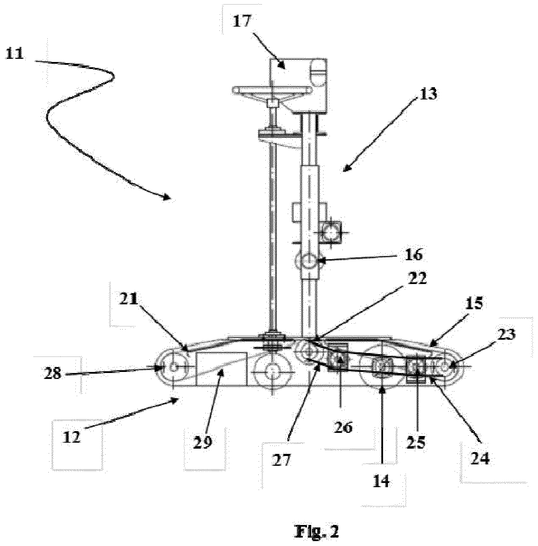

Figures 1 and 2 show a calibration device 11 for distributing wet-out fluid previously poured into a flexible liner hose after first drawing the air out from inside. The impregnated hose is configured to line the inside of a damaged infrastructure pipe so as to reduce the number of insertion pits that have to be located at intervals along the existing pipe run to repair the damaged pipe.

Calibration device 11 for distributing wet-out fluid is portable and is configured to distribute and calibrate wet-out fluid in proximity to the existing pipe to be lined, and it comprises a frame driven by roller means 14 that move it horizontally along the hose filled on the inside with wet-out fluid; viewed in cross-section, the frame is shaped like an inverted T, that is, the frame comprises a horizontal section 12 and a vertical section 13.

Horizontal section 12 of the frame includes rolling means 14 located on the side closest to the surface of the ground on which calibration device 11 moves, such that calibration device 11 can advance by means of the rotation of rolling means 14 at a constant forward speed from the proximal end to the distal end of the hose filled with wet-out fluid.

Calibration device 11 further comprises a motorised entrance conveyor shelf 15 and an exit conveyor shelf 21, the two conveyor shelves 15, 21 being separated by a lower calibration roller 22 parallel to an upper pressure calibration roller 16, the upper calibration roller being positioned vertically over the lower calibration roller.

Entrance conveyor shelf 15 and exit conveyor shelf 21 are operationally cooperating to facilitate the operation and forward motion of calibration device 11 from the proximal end to the distal end of the liner hose laid out on a suitable surface on which calibration device 11 can roll.

Entrance conveyor shelf 15 is motorised, and exit conveyor shelf 21 may also be motorised.

Both lower calibration roller 22 and upper calibration roller 16 are traction driven. Lower calibration roller 22 is mechanically attached by a roller mount to vertical section 13 of the frame where horizontal section 12 of the frame and vertical section 13 of the frame join.

Upper pressure calibration roller 16 is configured exert pressure to evenly distribute and calibrate the wet-out fluid that fills the inside of the liner hose so that the thickness of the layer of wet-out fluid attains a target thickness along the inner surface of the liner hose. After calibration, the liner hose lies or rests its weight on exit conveyor shelf 21.

Vertical section 13 comprises a set of telescoping tubes, wherein the upper tube slides in an upward and downward direction over the lower tube so that the height of upper calibration roller 16 above lower calibration roller 22 can be adjusted to a distribution and calibration height by means of a roller mount mechanically attached to the upper tube of vertical section 13 of the frame.

Vertical section 13 comprises locking means to fasten and lock the upper tube in position at the desired height on the lower tube.

Roller means 14 rotate on the surface of the ground, such that calibration device 11 can advance by controlled rotation of the roller means 14 at a constant forward speed from the proximal end to the distal end of the hose filled with wet-out fluid.

Calibration roller assembly 16, 22 are traction motor-driven rollers rotationally mounted so as to rotate in a horizontal direction to squeeze the liner hose whose inside is filled with wet-out fluid while allowing the hose to pass through between the two rollers 16, 22 that cooperate with roller means 14 to move calibration device 11 forward towards the distal end of the liner hose filled with wet-out fluid, ensuring that calibration device 11 moves forward along a straight horizontal path.

Upper pressure calibration roller 16 is attached to a pressure assembly to apply constant pressure to the hose as it passes through the two calibration rollers 16, 22 so that the wet-out fluid is squeezed and evenly distributed along the inside of the liner hose while holding constant a preselected separation between the two calibration rollers 16, 22, thereby calibrating the wet-out fluid thickness.

Calibration rollers 16, 22 and entrance conveyor shelf 15 are arranged so as to form an assembly for feeding liner hose into calibration device 11, and the feeder assembly cooperates with roller means 14 to move calibration device 11 in a linear direction from the proximal end to the distal end of the flexible liner hose.

Lower calibration roller 22 includes a first gear 26 that rotates lower roller 22 by means of a first transmission belt 27. In its turn, entrance conveyor shelf 15 has a second gear 25 for rotating a feed roller 23 by means of a second transmission belt 24, wherein first gear 26 mechanically cooperates with second gear 25 and the second transmission belt to transmit the rotary motion of lower calibration roller 22 to entrance shelf 15. That is, the rotary motion of entrance conveyor shelf 15 and lower calibration roller 22 are synchronised by first and second belts 27, 24.

The synchronous motion of the calibration roller assembly 22, 16, entrance conveyor shelf 15, and roller means 14 causes calibration device 11 to move forward horizontally and pulls the liner hose between calibration rollers 16, 22, with exit conveyor shelf 21 guiding the liner hose with the distributed, calibrated wet-out fluid saturating the inside off of calibration device 11, wherein the impregnated hose may be laid on the surface along which calibration device 11 moves forward or be coiled on a reel by means of a coiler.

Both the surfaces of conveyor shelves 15, 21 and the surfaces of vertically positioned calibration rollers 16, 22 are configured to adequately grip the flexible liner hose passing in between calibration rollers 16, 22 to impel calibration device 11 ahead at constant forward speed.

Thus, entrance conveyor shelf 15 is configured to feed vertically positioned calibration rollers 16, 22, where entrance drive conveyor shelf 15 forms an acute angle of less than 45º with the horizontal axis of the surface on which calibration device 11 moves ahead to help lift the hose up to entrance conveyor shelf 15 and guide the liner hose filled with wet-out fluid towards vertically positioned calibration rollers 16, 22.

Exit conveyor shelf 21 is configured to guide the liner hose filled with evenly distributed and calibrated wet-out fluid impregnating the hose off calibration device 11.

The liner hose may be coiled at any time once the wet-off fluid has been distributed and calibrated inside the liner hose.

Motorised entrance conveyor shelf 15 may be a belt-driven roller conveyor, a band-driven roller conveyor, a conveyor belt or band, or the like. Exit conveyor shelf 21 may also be a conveyor operated by a drive motor.

Exit conveyor shelf 21 may be a gravity idler roller conveyor, a conveyor belt, or the like, where the conveyor shelf forms an acute angle of less than 45° with the horizontal axis of the surface on which the liner hose is laid, to draw, guide, and direct the liner hose off onto the surface along which the calibration device 11 is moving forward.

First gear 26 and second gear 25 may be mechanically coupled to electrically, pneumatically, or hydraulically operated driving means, wherein rotation of gears 25, 26 determines the forward speed of calibration device 11.

Similarly, upper calibration roller 16 and the pressure assembly may also be electrically, pneumatically, or hydraulically driven, with calibration device 11 having a tank for hydraulic fluid 17 at the top of vertical section 13 of the frame to synchronously operate all of the rotating drive members of calibration device 11. The hydraulic pressure system is operated by an electric motor or an internal combustion engine.

Rotation of upper calibration roller 16 is synchronously coupled to the rotation of lower calibration roller 22 so as to cooperate in the forward motion of calibration device 11 at constant speed.

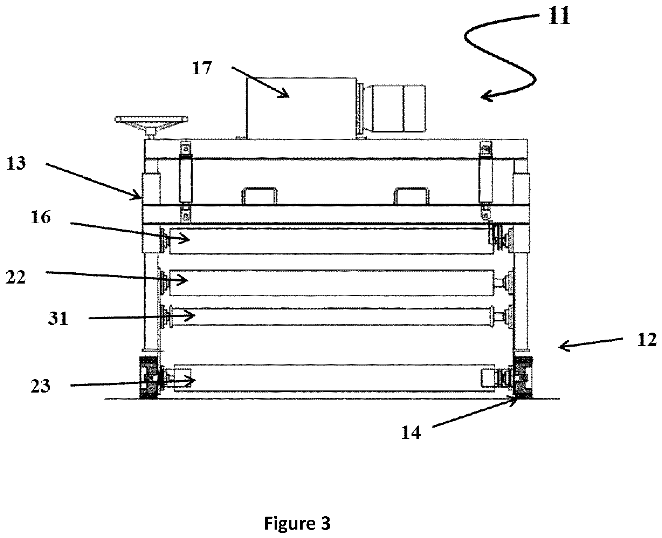

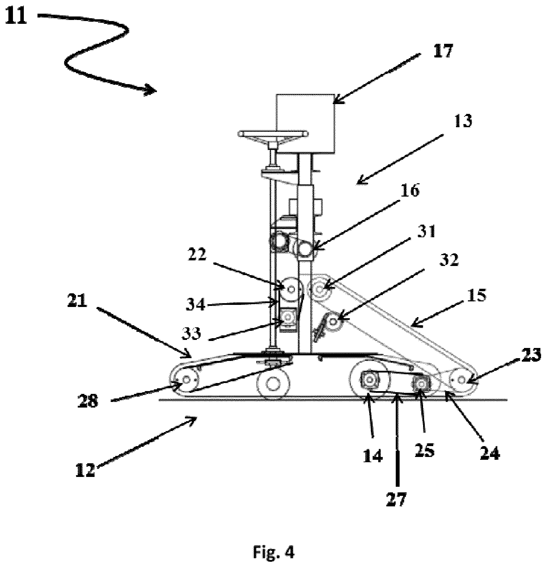

Figures 3 and 4 show an alternative calibration device 11 for distributing wet-out fluid previously injected into a flexible liner hose.

Calibration device 11 comprises a frame driven by roller means 14 that move it along the surface on which the hose filled with wet-out fluid lies; the cross-section of the frame is shaped like an inverted T, that is, the frame comprises a horizontal section 12 and a vertical section 13.

Horizontal section 12 of the frame includes roller means 14 located in proximity to the surface of the ground driven by a motor 25, such that calibration device 11 moves forward by the controlled rotation of roller means 14 from the proximal end to the distal end of the hose filled with wet-out fluid at a constant forward speed.

Entrance conveyor shelf 15 driven by motor 25 exerts traction on the outer surface of the filled liner hose, operating calibration device 11 and driving it forward from the proximal end to the distal end of the liner hose.

Motor 25 comprises an axle connected to a toothed wheel and drives feed roller 23 on entrance conveyor shelf 15 by means of second belt or chain 24; the axle is also connected to a toothed wheel that drives roller means 14 by means of first belt or chain 27.

Entrance conveyor shelf 15 has an exit roller 31 mounted on first support means that are adjustable in height positioned transversely on telescoping uprights in upper section 13 so as to vary the slope of entrance conveyor shelf 15. The angle of inclination of entrance shelf 15 ranges from 10 to 45°, e.g., preferably, an inclination of between 25 and 40º with respect to the ground, to reduce the calibration pressure that has to be applied by calibration rollers 16, 22 on the hose filled with wet-out fluid when it is pulled through between the two rollers.

The adjustable support means rotationally support motor-driven exit roller 31. There is a tensioning unit 32 mounted on vertical section 13 between exit roller 31 and horizontal section 12; that is, tensioning unit 32 stays in physical contact with the belt or band of entrance conveyor shelf 15.

The degree of inclination of entrance conveyor shelf 15, for example, between 30 and 35º, allows part of the excess wet-out fluid to flow, by gravity, along the inside of the filled hose from the upper portion to the lower portion of entrance conveyor shelf 15, thereby reducing the amount of tractive force that has to be expended by the roller means and pressure by calibration roller assembly 16, 22.

Entrance conveyor shelf 15 exerts further tractive force. Accordingly, pressure roller assembly 16, 22 and exit roller 31 form a rotational tractive and calibration arrangement operating on the wet-out fluid-filled hose, imparting forward motion to the calibration device. After calibration, the liner hose lies or rests its weight on exit conveyor shelf 21.

The inclined arrangement around an acute angle of inclination ranging between 20 and 40º results in lower calibration roller 22 being mounted on second support means that are adjustable in height and also positioned transversely on the telescoping uprights in upper section 13, wherein exit roller 31 and lower calibration roller 22 are in the same horizontal plane parallel to the ground.

Lower calibration roller 22 comprises an axle connected to a toothed wheel operated by a motor 33 by means of a third belt 34.

Upper calibration roller 16 is positioned above in a vertical plane perpendicular to the horizontal plane containing exit roller 31 and lower calibration roller 22.

## Claims

1. A calibration device for a liner hose impregnated with wet-out fluid to line an existing pipe for conveying fluids, comprising a horizontal section (12) driven by roller means (14) and a vertical section (13), **characterised in that** horizontal section (12) includes a motor-driven entrance conveyor shelf (15) and an exit conveyor shelf (21), the two conveyor shelves (15, 21) being separated by a lower calibration roller (22) parallel to an upper calibration roller (16), lower calibration roller (22) and upper calibration roller (16) being driven by motors, and roller means (14) configured to cooperate with motorised entrance conveyor shelf (15) and with motorised upper and lower calibration rollers (16, 22), to rotate roller means (14) of calibration device (11) forward at a constant forward speed.

2. Device according to claim 2, wherein roller means (14), motorised entrance conveyor shelf (15), and motorised lower calibration roller (22) are synchronised by a first and a second belt (27, 24).

3. Device according to any one of claim 2, wherein motorised entrance conveyor shelf (15) is a belt-driven roller conveyor, a band-driven roller conveyor, a conveyor belt or band, or the like.

4. Device according to claim 3, wherein entrance conveyor shelf (15) is configured to feed calibration rollers (16, 22) forming an acute angle of less than 45º with the horizontal axis of the surface on which calibration device (11) moves forward.

5. Device according to any one of claim 1, wherein exit conveyor shelf (21) is a gravity roller conveyor, a conveyor belt, or the like.

6. Device according to claim 5, wherein exit conveyor shelf (21) is a motor-driven conveyor table.

7. Device according to claim 5 or claim 6, wherein exit conveyor shelf (21) forms an acute angle of less than 45° with the horizontal axis of the surface on which the liner hose has been laid out, to play out and guide the liner hose off of calibration device (11).

8. Device according to claim 4, wherein entrance conveyor shelf (15) comprises an exit roller (31) mounted on first support means that are adjustable in height positioned on vertical section (13) so as to vary the slope of entrance conveyor shelf (15) to attain an inclination of between 10 and 45°.

9. Device according to claim 8, wherein entrance conveyor shelf (15) forms an acute angle of inclination of between 30 and 35° with respect to the ground.

10. Device according to claim 8, wherein the first support means rotationally support motor-driven exit roller (31).

11. Device according to claim 10, wherein entrance conveyor shelf (15) comprises a tensioning unit (32) mounted on vertical section (13) between exit roller (31) and horizontal section (12).

12. Device according to claim 10, wherein lower calibration roller (22) comprises an axle connected to a toothed wheel driven by a motor (33) by means of a third belt (34).

13. Device according to claim 11, wherein upper calibration roller (16) is positioned in a vertical plane perpendicular to the horizontal plane containing exit roller (31) and lower calibration roller (22).
